# EUROPÄISCHE PATENTANMELDUNG

(11) **EP 4 721 718 A2**
(43) Veröffentlichungstag der Anmeldung: **08.04.2026**
(21) Anmeldenummer: 26160042.3
(22) Anmeldetag: 22.07.2014
(51) Int. Cl.: A61H 23/02

(54) **STIMULATIONSVORRICHTUNG**

(30) Priorität: 23.09.2013 DE 102013110501
(62) Teilanmeldung aus: 18206800.7
(71) Anmelder: Novoluto GmbH, 10249 Berlin (DE)
(72) Erfinder: Lenke, Michael, 94526 Metten (DE)
(74) Vertreter: Araujo Edo, Mario

(57) **Zusammenfassung**

Stimulationsvorrichtung (1) für die Klitoris (12); aufweisend: eine Druckfelderzeugungseinrichtung (2) mit einer ersten Kammer (3); und einer zweiten Kammer (4) mit zumindest einer Öffnung (42) zum Aufsetzen über die Klitoris (12); und einem Verbindungselement (5), das die erste Kammer (3) mit der zweiten Kammer (4) verbindet; und einer Antriebseinheit (6), die das Volumen der ersten Kammer (3) durch Auslenkung einer flexiblen Wand (31) der ersten Kammer (3) derart verändert, dass über das Verbindungselement (5) in der zweiten Kammer (4) ein stimulierendes Druckfeld erzeugt wird; und eine Steuereinrichtung (7), welche die Antriebseinheit (6) ansteuert; wobei das in der zweiten Kammer (4) erzeugte Druckfeld aus einem Muster von Unter- und Überdrücken besteht, die auf den Normaldruck aufmoduliert sind.

## Beschreibung

Die vorliegende Erfindung betrifft eine Stimulationsvorrichtung für erogene Zonen, insbesondere für die Klitoris, ein System mit einer Stimulationsvorrichtung, sowie Verfahren zur Stimulation von Körperteilen.

Die erogenen Zonen des menschlichen Körpers können mit einer Vielzahl von Hilfsmitteln stimuliert werden. So werden beispielsweise Vibratoren verwendet, um mittels direkter Berührung einen Reiz auf einen bestimmten Hautbereich auszuüben. Diese Form der Stimulation kann jedoch zu Irritationen oder Hautreizungen führen. Auch kann ein direkter Kontakt der Intimzone mit derartigen Hilfsmitteln aus individuellen Gründen, beispielsweise der Hygiene oder wegen persönlichen Vorbehalten, nicht gewünscht sein.

Insbesondere die direkte Stimulation der Klitoris, beispielsweise mit einem Auflegevibrator, ist problembehaftet. So ist bei der Frau die Klitoris üblicherweise die empfindlichste erogene Zone. Die gesamte Klitoris ist stark mit Nervenendungen ausgestattet, womit diese besonders berührungsempfindlich und empfänglich für sexuelle Reize ist. Hier ist insbesondere die Klitoriseichel, in der sich die Nervenstränge der beiden Schenkel treffen, hervorzuheben. So kommt es einerseits bei häufiger Anwendung eines Auflegevibrators zur direkten Stimulation zu Gewöhnungseffekten bzw. zur Konditionierung der stimulierten erogenen Zone, während andererseits die erstmaligen Anwendungen eines derartigen Gerätes eine gewisse Einübung bzw. Eingewöhnung erfordern.

Weiter haben im Jahre 2006 durchgeführte medizinische Studien die weibliche Klitoris als maßgeblichen Ausgangspunkt des weiblichen Klimax bestimmt und erstmals die unterschiedlichen Empfindungsqualitäten von klitoralem (und vaginalem) Orgasmus neurologisch nachgewiesen. So gilt nach der jüngeren medizinischen Forschung die Stimulation der Klitoris, und nicht der Vagina, als Ausgangspunkt der sexuellen Erregung der Frau und damit als Schlüssel zum weiblichen "sexuellen Vergnügen".

Dabei ist weiter die Empfindlichkeit der menschlichen erogenen Zonen, beispielsweise der Klitoris, der inneren und äußeren Labia oder der Brustwarzen, individuell sehr unterschiedlich. Die Person kann so empfindlich sein, dass eine direkte Stimulierung erst nach längerem Vorspiel, und auch dann nur sehr zart, oder gar nicht in Betracht kommt. Weiter kann sich die Empfindlichkeit der entsprechenden Zone von Situation zu Situation oder sogar während eines Sexualakts stark verändern.

Aus vorgenannten Gründen sind verschiedene indirekte Stimulationsformen als Alternative zur direkten Stimulation gängige Praxis.

Zur indirekten Stimulation von erogenen Zonen und insbesondere der Klitoris werden herkömmliche Vakuumvorrichtungen verwendet, um die erogenen Zonen der betreffenden Person ohne direkte Berührung des zu stimulierenden Hauptbereichs zu reizen. So sind beispielsweise Vakuumpumpen für die weiblichen primären oder sekundären Geschlechtsorgane bekannt, welche üblicherweise eine Saugglocke zum Aufsetzen und eine Handpumpe aufweisen. Der mit dieser Art von Vorrichtung beispielsweise auf die Klitoris ausgeübte Unterdruck erzeugt einen negativen Druck in der Klitoris selbst, welcher üblicherweise niedriger ist als der systolische Blutdruck. Dieser Druckunterschied führt zu einer Erweiterung der Klitoris und/oder stimuliert den Blutfluss in dem betroffenen Bereich. Diese klitorale vaskulare Blutwallung dient sowohl der Lustförderung durch Steigerung der Empfindlichkeit als auch der optischen und haptischen Manipulation. Auch führt die bessere Durchblutung zu einem erhöhten Austreten von Scheidenfeuchtigkeit, die die Stimulation angenehmer gestaltet. Jedoch ist die manuelle Betätigung der Handpumpe oft lästig oder störend. Zudem kann es auch bei dieser Gerätekategorie durch die langfristigere bzw. ununterbrochene Anwendung von Unterdruck zu Gewöhnungseffekten kommen, die die Wirksamkeit der Vorrichtung auf Dauer einschränken. Zudem reicht eine reine Erhöhung des Blutflusses in der Klitoris oftmals nicht aus, um zum Klimax zu gelangen; somit werden Vakuumpumpen oftmals nur als Vorspiel eingesetzt, um den Klimax mit einer nachfolgenden direkten (Druck-) Massage der erogenen Zone zu erreichen.

Anstelle der manuell betriebenen Vakuumpumpe werden vermehrt auch elektrisch angetriebene Vakuumpumpen verwendet. Als Beispiel hierfür offenbart die WO 2006 / 05 82 91 A2 eine Vorrichtung zur sexuellen Therapie, wobei die Anordnung aus einer röhrenförmigen Saugkammer für die Klitoris, einer elektrischen Vakuumquelle (Vakuumpumpe) und mehreren Luftflussöffnungen besteht. Durch den Betrieb der Vakuumpumpe wird in der Kammer ein andauernder Luftfluss bzw. Luftaustausch im Bereich der Klitoris erzeugt. Dabei wird nachteilhaft die durch den Unterdruck verstärkt auftretende Scheidenfeuchtigkeit abgesaugt, weshalb ein Trocknungseffekt der stimulierten Hautpartien eintritt. Ebenso führt die abgesaugte feuchte Luft zu einer Verschmutzung der strömungstechnisch nachfolgenden Vakuumanordnung, beispielsweise der Vakuumpumpe. So können derartige Anordnungen mit Vakuumpumpen in ihrer Hygiene problematisch sein, da Vakuumpumpe und die zugehörigen Ventile bzw. lufttechnischen Bauteile oftmals Toträume bzw. tote Winkel aufweisen und/oder schwer zu reinigen sind. Weiter dient die Vorrichtung der Therapie der Blutgefäße der Klitoris, und nicht der Stimulation bis zum sexuellen Höhepunkt.

Die US 6 099 463 A offenbart eine Vorrichtung zur Stimulation der Klitoris mit einer röhrenförmigen Saugkammer, einer Vakuumquelle bzw. einer Vakuumpumpe und mehreren Ventilen, mit denen die Größe des Vakuums geregelt wird. Das Vakuum kann hierbei auch in zyklischer Form angewandt werden, um eine Stimulationswirkung zu erzielen, wobei auch bei dieser Vorrichtung aufgrund der Anwendung eines andauernden Vakuums Gewöhnungseffekte zu erwarten sind. Auch hier bestehen die vorstehend erläuterten Nachteile der Hygiene und der Austrocknung der zu stimulierenden Hautpartie. Ebenso ist die drucktechnische Anordnung mit mehreren Ventilen, Vakuumpumpe, etc. relativ komplex.

Die US 6 464 653 B1 offenbart therapeutische Vorrichtungen und Verfahren, welche eine klitorale Blutwallung mit Hilfe eines mit einer Vakuumpumpe erzeugten Vakuums erzeugen, um die Behandlung von Störungen der Klitoris, beispielsweise von Inkontinenz, zu unterstützen. Mit Hilfe eines Steuerventils bzw. Modulators, das mit dem Finger entsprechend abgedeckt werden kann, wird die Höhe des Vakuums in der Saugkammer manuell eingestellt oder variiert. Dies erfordert die Aufmerksamkeit des Benutzers und kann unter Umständen störend oder ablenkend sein. Auch weist diese relativ komplexe Vorrichtung mit weiteren Ventilen die vorstehend erläuterten Nachteile der Hygiene und der Austrocknung auf, wobei die Vorrichtung zudem langfristigen Therapiezwecken und nicht der kurzfristigen sexuellen Stimulation dient.

Die WO 2008 / 02 80 76 A2 offenbart eine therapeutische Vorrichtung für Frauen, welche vornehmlich der Behandlung sexueller Störungen dient. Dabei beinhaltet die Vorrichtung eine Kombination aus indirekter Stimulation mit Hilfe einer Vakuumkammer und direkter Stimulation mit Hilfe mechanischer Vibratoren und Oszillatoren.

Bei dieser therapeutischen Vorrichtung dient der Unterdruck der Erhöhung des Blutflusses in der Klitoris, während die eigentliche Stimulation bzw. Massage des Hautbereichs mit Hilfe direkter mechanischer Vibrationen/Oszillationen erfolgt. So ist eine Saugglocke zum Aufsetzen auf den zu stimulierenden Hautbereich intern über eine mechanische Verbindung mit einem Motor verbunden. Die Saugglocke wird durch den Motor nach Aktivierung der Vorrichtung erweitert, wobei sich das Volumen der Saugglocke vergrößert. Das resultierende Volumen der Saugglocke und damit die Stärke des Vakuums kann mit Hilfe von Steuerungselementen an der Vorrichtung eingestellt werden. Die durch den Ansaugvorgang in der Vorrichtung verdrängte Luft wird über ein Rohr wieder nach außen abgegeben. Bei dieser Vorrichtung hat das Vakuum nur eine unterstützende Funktion, während die eigentliche Stimulation in direkter Weise erfolgt, was auch die vorstehend erläuterten Nachteile einer direkten Stimulation nach sich zieht.

Die US 2013 / 001 276 9 A1 offenbart eine Vorrichtung, bei der ein pulsierender Überdruck zur Stimulation als Luftdruckmassage verwendet wird. So erzeugt eine Pumpe bzw. ein Kompressor einen pulsierenden Überdruck, welcher mit Hilfe einer Düse auf die zu stimulierende erogene Zone gerichtet wird. Bei dieser Vorrichtung trocknet die betroffene Hautpartie nachteilhaft stark ab bzw. aus. Ebenso besteht üblicherweise ein Temperaturunterschied zwischen der Temperatur der zugeführten Luft und der Temperatur der zu stimulierenden Hautpartie, was unter Umständen als störend empfunden werden kann. Auch treten bei dieser Vorrichtung die vorstehend erläuterten Probleme der Hygiene auf, wobei in diesem Falle eventuell in der Vorrichtung befindliche Erreger oder Keime oder sonstige Verschmutzungen zudem noch direkt zu dem Intimbereich des Benutzers transportiert werden.

So haben die Vorrichtungen des Stands der Technik den Nachteil gemein, dass die Komplexität der Unterdruck bzw. Überdruck erzeugenden Anordnungen hoch und diese Vorrichtung hygienische Probleme aufweisen können.

Weiter haben die Vorrichtungen des Stands der Technik den weiteren Nachteil gemein, dass bei länger andauernden bzw. bei kontinuierlichen oder häufig wiederkehrenden Anwendungen von Unterdrücken Gewöhnungseffekte auftreten.

Ein weiterer Nachteil bei einigen der vorstehend beschriebenen Vakuumvorrichtungen besteht darin, dass erstens der Unterdruck mittels eines Regelventils oder einer Vakuumpumpe begrenzt sein muss, und zweitens der Unterdruck mittels einer manuellen Öffnung eines Freigabeventils abgebaut werden sollte, bevor die Saugglocke von der Haut abgelöst wird. Sollte eines der Ventile einen technischen Defekt aufweisen und/oder der Benutzer das Gerät falsch bedienen, so besteht unter Umständen Verletzungsgefahr.

So ist es in Anbetracht der vorstehend erläuterten Probleme die der Erfindung zugrunde liegende Aufgabe, eine Stimulationsvorrichtung anzugeben, welche einen einfachen Aufbau aufweist und in der Verwendung einfach und sicher ist.

Eine weitere Aufgabe der vorliegenden Erfindung besteht darin, eine Stimulationsvorrichtung mit einem effektiven stimulationsauslösenden Effekt anzugeben, welcher für der Stimulation einer erogenen Zone, insbesondere der weiblichen Klitoris, geeignet ist.

Zudem bestehen Teilaufgaben der Erfindung darin, eine Vorrichtung vorzusehen, welche ein Austrocknen der zu stimulierenden erogenen Zonen vermeidet, hygienisch ist und Gewöhnungseffekte vermeidet.

Die der Erfindung zugrunde liegende Aufgabe wird durch die Stimulationsvorrichtung gemäß Anspruch 1 sowie durch eine Verwendung nach Anspruch 13 gelöst. Vorteilhafte Weiterentwicklungen und Ausführungsformen sind Gegenstand der weiteren nebengeordneten und abhängigen Ansprüche.

Erfindungsgemäß weist eine Druckfelderzeugungseinrichtung der Stimulationsvorrichtung zumindest eine erste Kammer und zumindest eine zweite Kammer mit zumindest einer Öffnung zum Aufsetzen auf ein Körperteil bzw. auf die erogene Zone und zumindest ein Verbindungselement, welches die erste Kammer mit der zweiten Kammer verbindet, auf.

Durch diese erfindungsgemäße Ausbildung von strömungstechnisch über zumindest ein Verbindungselement kommunizierenden Kammern kann durch Änderung des Volumens der ersten Kammer in einfacher Weise ein Druckfeld in der zweiten Kammer erzeugt werden, dass zeitweise auf den zu stimulierenden Hautbereich gerichtet ist.

Ein Druckfeld im Sinne der Erfindung ist ein sich zeitlich veränderliches Feld von Mediendrücken, welches zeitweise Überdrücke und zeitweise Unterdrücke aufweist, wobei ein Unterdruck ein Mediendruck ist, der unter dem Referenzdruck liegt, und ein Überdruck ein Mediendruck ist, der über dem Referenzdruck liegt.

Das Medium ist üblicherweise gasförmig, vorzugsweise Luft, kann jedoch beispielsweise alternativ oder additiv ein flüssiges Medium, beispielsweise Wasser oder handelsübliches Gleitmittel, sein. Beispielsweise kann das Gleitmittel vor Benutzung der Stimulationsvorrichtung in die erfindungsgemäßen Kammern eingefüllt werden. Auf diese Weise kann die Stimulation des entsprechenden Hautbereichs anstelle mit Luft auch mit einer geeigneten hautfreundlichen Flüssigkeit erfolgen, was je nach individueller Präferenz des Anwenders gewünscht sein kann. Als weiteres Beispiel kann die Stimulationsvorrichtung auch unter Wasser mit Wasser als Medium verwendet werden (beispielsweise in der Badewanne).

Der Referenzdruck ist üblicherweise der jeweils bei Beginn der Anwendung (d.h. vor dem Aufsetzen der Stimulationsvorrichtung auf den zu stimulierenden Hautbereich) vorliegende Umgebungsdruck in Bezug auf die Stimulationsvorrichtung. Bei der vorzugsweisen Anwendung der Stimulationsvorrichtung mit Luft ist der Referenzdruck der aktuell vorliegende Luftdruck bzw. der Normaldruck.

Durch das erfindungsgemäße Druckfeld wird der zu stimulierende Hautbereich einerseits in seiner Durchblutung angeregt, während dieser andererseits indirekt massiert wird. So werden zwei vorteilhafte Effekte kombiniert. Aufgrund der erhöhten Durchblutung ist die erogene Zone der betreffenden Person empfindlicher, während zudem ein Massageeffekt erzeugt wird, der der Stimulation der erogenen Zone, beispielsweise der sexuellen Erregung bis zum Klimax, dient. Der Massageeffekt wird durch die kinetische Energie des aus der ersten Kammer durch das Verbindungselement strömenden Mediums gegen die Oberfläche des zu stimulierenden Hautbereichs erzeugt. Auf diese Weise wird der Massageeffekt indirekt, also ohne direkte Berührung der zu stimulierenden Hautpartie durch einen festen Körper, beispielsweise durch einen Vibrator, erzeugt, was zur Folge hat, dass die eingangs erläuterten Nachteile der direkten Stimulation vermieden werden.

Durch die beispielhafte Anwendung des sich erfindungsgemäß zeitlich verändernden Druckfeldes auf die Klitoris wird durch das Druckfeld eine Reizung nachgeahmt, welche beim Sexualverkehr üblicherweise stattfindet. Dabei wird durch die Kohabitationsbewegung ebenfalls ein wechselnder Reiz an der Klitoris erzeugt. So handelt es sich um eine lebensnahe Imitation des natürlichen Kohabitationsaktes, wobei ärztliche Aussagen bestätigen, dass die Anwendung des erfindungsgemäßen Druckfeldes weder zu Gewöhnungseffekten noch zur Suchterzeugung führt. Dies ist insbesondere in der abwechselnden Anwendung von Unter- und Überdrücken (bzw. auch in der nicht kontinuierlichen Anwendung nur einer Art eines Drucks) begründet.

Weiter ist der maximal anwendbare Druck regelmäßig durch die maximale Belastbarkeit des zu stimulierenden Hautbereichs beschränkt. So birgt beispielsweise ein zu hoher Unterdruck besonders in erogenen Zonen das Risiko von schmerzhaften Verletzungen. Ausschließlich mit Unterdrücken arbeitende Stimulationsvorrichtungen sind in ihrer Arbeitsweise üblicherweise auf dieses Maximum beschränkt. Im Gegensatz dazu wird erfindungsgemäß durch die Kombination von Über- und Unterdrücken ein erweiterter Arbeitsbereich des stimulationsauslösenden Druckfeldes bzw. Effektes geschaffen, da der Arbeitsbereich des Drucks nunmehr sowohl im positiven als auch im negativen Bereich bis zum Maximum ausgenutzt werden kann.

Durch die Ausrichtung des zumindest einen Verbindungselements auf den zu stimulierenden Hautbereich kann das Druckfeld unmittelbar wirken, wobei das Druckfeld maßgeblich durch die Konfiguration des zumindest einen Verbindungselements und der zumindest einen Öffnung von dem Verbindungselement in die zweite Kammer beeinflusst wird, und so je nach Anwendung der Stimulationsvorrichtung einstellbar ist. So kann die zumindest eine Öffnung des Verbindungselements dem zu stimulierenden Körperteil, vorzugsweise direkt, gegenüber liegen. Beispielsweise kann das Verbindungselement bei einer Stimulationsvorrichtung, welche für die Klitoris bestimmt ist, eine einzelne Durchgangsöffnung mit Düsenwirkung auf die Klitoriseichel zwischen der ersten und der zweiten Kammer aufweisen. Alternativ kann das zumindest eine Verbindungselement aus mehreren, beispielsweise vier, Durchgangsöffnungen zwischen den Kammern bestehen, wenn ein großflächigerer Hautbereich stimuliert werden soll.

Weiter entsteht nach dem Aufsetzen der halbseitig bzw. teilweise geöffneten zweiten Kammer auf den zu stimulierenden Hautbereich ein in sich abgeschlossenes System der Medien- bzw. Luftströmung in der Druckfelderzeugungseinrichtung. So wird das Medium bzw. die Luft maßgeblich zwischen den Kammern hin- und herbewegt, während ein Austausch mit Medien bzw. mit Luft von außerhalb des Systems zumindest weitgehend vermieden wird. So ist vorzugsweise die erste Kammer über bzw. durch das Verbindungselement ausschließlich mit der zweiten Kammer verbunden. So bestehen keine anderen Verbindungen der ersten Kammer als diejenigen zur zweiten Kammer; beispielsweise besteht keine direkte Verbindung der ersten Kammer mit der Umgebung des Gerätes über ein Druckventil oder über einen Luftabführkanal.

Beispielsweise wird sich die Temperatur der Luft in dem erfindungsgemäßen Strömungssystem schnell an die Hauttemperatur anpassen, während das störende Zuführen von neuer (beispielsweise kalter) Luft von außerhalb des Systems vermieden wird, so wie dies beim Stand der Technik u.A. bei der Verwendung von Vakuumpumpen der Fall sein kann. Zudem werden Abtrockungseffekte vermieden, da in einem geschlossenen System kein oder kaum Abtransport von stimulationsfördernder Flüssigkeit, beispielsweise Körperflüssigkeit, stattfindet.

Weiter weist die erfindungsgemäße Druckfelderzeugungseinrichtung aufgrund des einfachen Aufbaus den Vorteil einer erhöhten Hygiene und einer verbesserten Reinigungsfähigkeit auf. Dabei vermeidet die vorliegende Erfindung Ventile oder Pumpen/Kompressoren mit potentiellen Toträumen und nicht zu reinigenden Stellen. So ist die erfindungsgemäße Druckfelderzeugungseinrichtung einfach zu reinigen. Beispielsweise kann eine Reinigung der Stimulationsvorrichtung in einfacher Weise durch Einfüllen einer Reinigungsflüssigkeit in die erste Kammer und aktivieren des Druckfelds erfolgen. Alternativ kann die zweite Kammer austauschbar angeordnet sein, was die Reinigung beider Kammern ebenfalls erleichtert. Weiter können die erfindungsgemäßen Kammern und das Verbindungselement der Druckfelderzeugungseinrichtung einstückig hergestellt sein, wobei diese beispielsweise aus einem einzelnen Plastikformteil (z.B. Gummi) bestehen.

Zudem führt der erfindungsgemäße Aufbau zur Vermeidung komplexer strömungstechnischer Elemente, wie z.B. Ventile, was zu einer Vereinfachung der Herstellung führt.

Weiter weist die erfindungsgemäße Stimulationsvorrichtung eine Antriebseinheit, welche das Volumen der ersten Kammer derart verändert, dass über das Verbindungselement in der zweiten Kammer ein Druckfeld erzeugt wird, welches der Stimulation der erogenen Zone dient, und eine Steuereinrichtung auf, welche die Antriebseinheit ansteuert.

Das zwischen den Kammern transportierte Medium ist in seinem Volumen prinzipbedingt auf das maximale Volumen der ersten Kammer begrenzt. Zudem kann das transportierte Volumen durch die maximal mögliche Volumenänderung, welche durch die Antriebseinheit bewirkt wird, weiter konstruktiv beschränkt werden.

Dies hat zur Folge, dass der maximale Über- bzw. Unterdruck, den die Stimulationsvorrichtung in der zweiten Kammer aufbauen kann, aufgrund der Dimensionierung der Komponenten der Druckfelderzeugungseinrichtung und des Antriebs beschränkt ist. Insbesondere kann der maximale Über- bzw. Unterdruck auf ein Maß beschränkt werden, der eine Verletzungsgefahr für die zu stimulierenden Hautbereiche minimiert oder ausschließt. Beispielsweise erübrigt sich damit ein im Stand der Technik übliches Sicherheitsventil oder ein manuelles Eingreifen des Benutzers in den Stimulationsvorgang, beispielsweise ein Öffnen eines Freigabeventils.

Weiter wird die zeitliche Veränderung des Druckfeldes bzw. die Modulation des Druckfeldes durch die Steuereinrichtung weitgehend automatisch gesteuert. So kann in der Steuereinrichtung die Modulation des Druckfeldes, beispielsweise Intensität, zeitlicher Verlauf oder Abfolge, vorgespeichert sein. Vorzugsweise kann die zeitliche Veränderung des Druckfeldes regelmäßige bzw. wiederkehrende (Stimulations-) Muster aufweisen, beispielsweise Impulse mit einem vorgegebenen Takt oder sich regelmäßig abwechselnde Impulsfolgen. Auf diese Weise kann sich die Interaktion des Benutzers mit der Stimulationsvorrichtung erfindungsgemäß auf das An- und das Ausschalten und die Wahl des Stimulationsmusters beschränken, während die Stimulationsvorrichtung das bevorzugte Stimulationsmuster automatisch ausführt. Somit ist erfindungsgemäß die Anwendungskomplexität der Stimulationsvorrichtung gerade im Vergleich zu den herkömmlichen (medizinischen) Vakuum-Stimulationsvorrichtungen niedrig. Alternativ oder zusätzlich kann der Benutzer die Stimulationsmuster der Stimulationsvorrichtung während oder vor dem Betrieb individuell konfigurieren.

Gemäß einem weiteren Aspekt der Erfindung wird nach dem nebengeordneten Anspruch 15 ein System mit der erfindungsgemäßen Stimulationsvorrichtung vorgeschlagen, welches eine zu der Stimulationsvorrichtung getrennt angeordnete Fernsteuervorrichtung aufweist, wobei die Steuereinrichtung der Stimulationsvorrichtung von der Fernsteuereinrichtung ferngesteuert wird. So kann eine übliche kabellose (beispielsweise über Funk) oder kabelgebundene Fernsteuerung eingesetzt werden, um die Modulation der Stimulationsvorrichtung oder deren Aktivierung von einem weiteren Benutzer fernzusteuern zu lassen.

Gemäß einem weiteren Aspekt der Erfindung wird nach Anspruch 14 die Verwendung der erfindungsgemäßen Stimulationsvorrichtung als Sexspielzeug zur Stimulation der weiblichen Klitoris vorgeschlagen. Wie eingangs erläutert ist die weibliche Klitoris eine besonders empfindliche erogene Zone der Frau, weshalb die erfindungsgemäße Verwendung einer indirekten Massage- in Kombination mit einer Unterdruckstimulation für dieses Körperteil zur Stimulation bis zum Orgasmus besonders vorteilhaft erscheint.

Die vorstehend beschriebenen Merkmale und Funktionen der vorliegenden Erfindung sowie weitere Aspekte und Merkmale werden nachfolgend anhand einer detaillierten Beschreibung von bevorzugten Ausführungsformen unter Bezugnahme auf die beigefügten Figuren weiter beschrieben.

### KURZE BESCHREIBUNG DER ZEICHNUNGEN

Hierbei zeigt/zeigen:
Fig. 1 : eine Vorderansicht einer ersten Ausführungsform der erfindungsgemäßen Stimulationsvorrichtung;
Fig. 2 : eine perspektivische Seitenansicht der ersten Ausführungsform der erfindungsgemäßen Stimulationsvorrichtung;
Fig. 3 : einen Querschnitt durch die erfindungsgemäßen Stimulationsvorrichtung der ersten Ausführungsform;
Fig. 4 : einen Querschnitt durch eine Druckfelderzeugungseinrichtung eines ersten Aspekts der vorliegenden Erfindung im ersten Zustand;
Fig. 5 : einen Querschnitt durch eine Druckfelderzeugungseinrichtung eines ersten Aspekts der vorliegenden Erfindung im zweiten Zustand;
Fig. 6 : einen Querschnitt durch eine Druckfelderzeugungseinrichtung eines ersten Aspekts der vorliegenden Erfindung im dritten Zustand;
Fig. 7 : einen Querschnitt durch eine Druckfelderzeugungseinrichtung eines zweiten Aspekts der vorliegenden Erfindung;
Fig. 8 : einen Querschnitt durch eine Druckfelderzeugungseinrichtung eines dritten Aspekts der vorliegenden Erfindung;
Fig. 9 : einen Querschnitt durch eine Druckfelderzeugungseinrichtung eines vierten Aspekts der vorliegenden Erfindung;
Figuren 10 a), b) und c) : Querschnitte durch eine Druckfeld-erzeugungseinrichtung eines fünften Aspekts der vorliegenden Erfindung;
Fig. 11 : einen teilweisen Querschnitt durch eine zweite Ausführungsform der erfindungsgemäßen Stimulationsvorrichtung;
Figuren 12 a) bis f) : verschiedene Unter- und Seitenansichten weiterer Aspekte einer zweiten Kammer der vorliegenden Erfindung;
Fig. 13 : ein Blockdiagramm einer Ausführungsform der vorliegenden Erfindung;
Figuren 14 a) bis c) : Diagramme von verschiedenen Mustern der Druckmodulationen der vorliegenden Erfindung

### BESCHREIBUNG BEVORZUGTER AUSFÜHRUNGSFORMEN

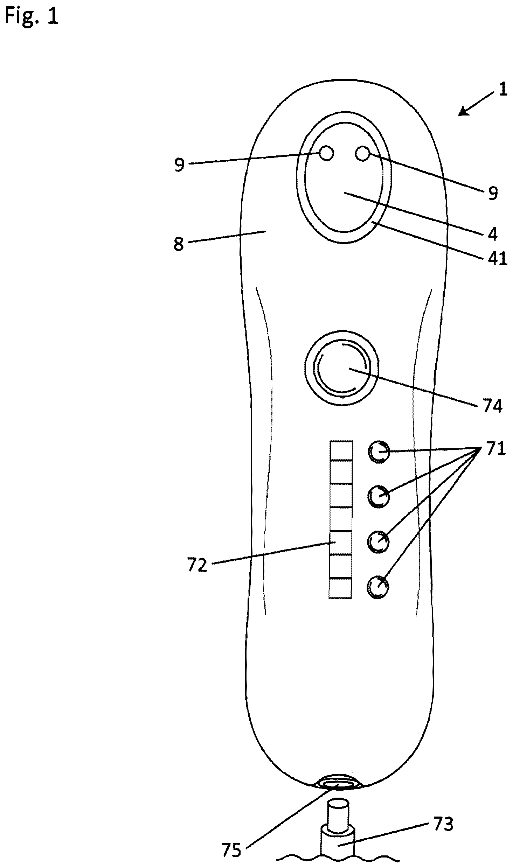

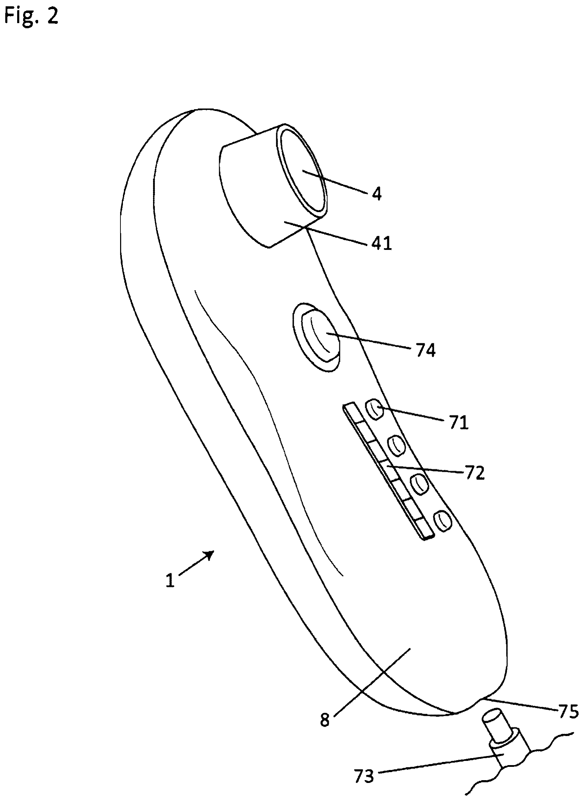

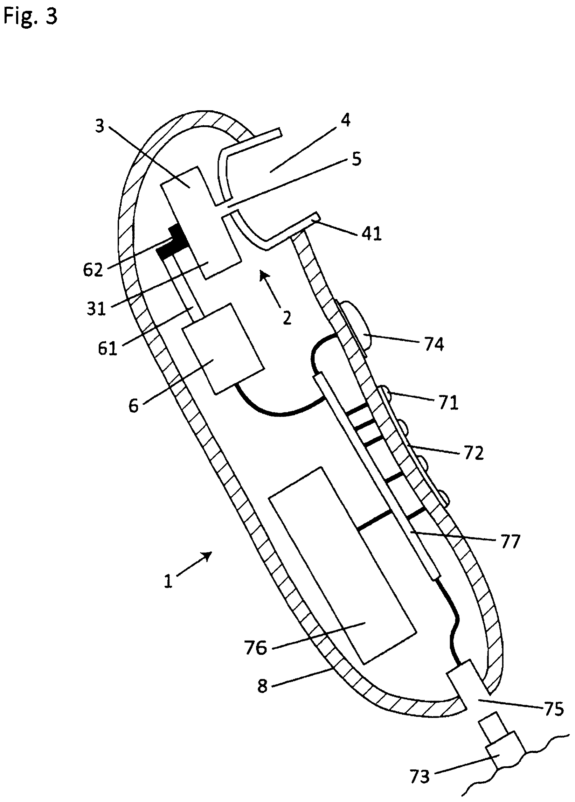

Bezugnehmend auf Fig. 1 wird eine Vorderansicht einer ersten Ausführungsform der erfindungsgemäßen Stimulationsvorrichtung 1 erläutert, wobei in Fig. 2 eine perspektivische Ansicht und in Fig. 3 ein Querschnitt der erfindungsgemäßen Stimulationsvorrichtung 1 der ersten Ausführungsform gezeigt ist.

Die ersten Ausführungsform der Stimulationsvorrichtung 1 ist ein, vorzugsweise tragbares, Elektro- oder Kleingerät, welches ein Gehäuse 8, eine Druckfelderzeugungseinrichtung 2, Bedienelemente 71, eine Anzeige 72, einen An-/AusSchalter 74, eine Buchse 75, eine optionale Batterie 76 und eine optionale Beleuchtung 9 aufweist.

Das Gehäuse 8 ist vorzugsweise derart ergonomisch ausgeführt, dass man es mit einer Hand bequem halten kann und es keine scharfen bzw. spitzen Kanten aufweist. Weiter kann das Gehäuse 8 aus einem Kunststoff, beispielsweise Polycarbonat (PC) oder Acrylnitril-Butadien-Styrol (ABS), bestehen. Zudem können die Griffbereiche oder auch das gesamte Gehäuse mit einem haptisch vorteilhaften Silikon ergänzt bzw. ausgestaltet sein. Das Gehäuse 8 ist vorzugsweise zumindest wasserabweisend oder spritzwasserfest ausgestaltet, beispielsweise Schutzklasse IP 24.

Die Bedienelemente 71 dienen der Einstellung der Betriebsart des Gerätes, d.h. der Einstellung des Modulationsmusters des Druckfeldes. Die Bedienelemente 71 können beispielsweise als zumindest ein Drucktaster, als zumindest ein Drehschalter, oder als zumindest ein berührungsempfindlicher Schalter ausgeführt sein. Weiter können die Bedienelemente 71 ein optisches Feedback zur Betätigung, beispielsweise mittels in den Schalter integrierter Leuchtdioden (LED), abgeben.

Eine optionale Anzeige 72 dient der Information des Benutzers über den Gerätezustand und/oder den Einstellzustand. Die Anzeige 72 kann beispielsweise aus einer Mehrzahl von Leuchtdioden oder als LCD-Anzeige ausgestaltet sein. Die angezeigten Informationen können beispielsweise der Ladezustand einer optionalen Batterie oder die aktuelle Einstellung des Modulationsmusters sein.

Der An-/Aus- Schalter 74 dient der Aktivierung und Deaktivierung der Stimulationsvorrichtung 1. Dieser An-/Aus- Schalter 74 kann beispielsweise ein Drucktaster, welcher die Stimulationsvorrichtung 1 bei längerem Drücken ein- bzw. ausschaltet, oder ein einrastender Schiebeschalter sei.

Eine Buchse 75 dient der externen Stromversorgung der Stimulationsvorrichtung 1 über einen externen Stecker 73, welcher beispielsweise an einen externen Netzadapter angeschlossen ist. Um die Spritzwasserfestigkeit der Stimulationsvorrichtung 1 sicherzustellen, kann vorzugsweise anstelle der Buchse ein magnetischinduktiver Übertrager vorgesehen sein, welcher eine Leistungsübertragung in die Stimulationsvorrichtung 1 ohne einen elektrischen leitenden Kontakt ermöglicht. Vorzugsweise weist die Stimulationsvorrichtung 1 zudem eine Batterie, beispielsweise einen Nickel-Metalhydrit-Akku (NiMH), für einen kabellosen Betrieb auf. Alternativ kann auch ein (längeres) Stromversorgungskabel aus der Stimulationsvorrichtung herausgeführt sein.

Die Druckfelderzeugungseinrichtung 2 einer ersten Ausführungsform weist eine erste Kammer 3 im Inneren der Stimulationsvorrichtung 1, eine zweite Kammer 4 zum Aufsetzen auf ein zu stimulierendes Körperteil 11, und ein Verbindungselement 5 auf, welche die erste Kammer 3 mit der zweiten Kammer 4 verbindet.

Eine Antriebseinheit 6, beispielsweise ein Elektromotor, treibt über eine Achse 61 und mittels eines Exzenters 62 (oder alternativ mittels einer Pleuelstange) die erste Kammer 3 derart an, dass das Volumen der ersten Kammer 3 entsprechend Drehung der Achse 61 der Antriebseinheit 6 verändert wird. Hierzu wird angemerkt, dass in der Stimulationsvorrichtung 1 grundsätzlich alle Antriebsarten einsetzbar sind, welche eine Auslenkung der Wand 31 der ersten Kammer 3 zur Volumenänderung bewirken. So kann dies beispielsweise hydraulisch, pneumatisch, piezoelektrisch, mechanisch oder elektromagnetisch geschehen. Beispiele hierfür werden später noch näher erläutert.

Eine Steuereinrichtung 7 steuert die Antriebseinheit 6, die Bedienelemente 71 und die Anzeige 72 an. Dabei wird die Steuereinrichtung 7 und die Antriebseinheit 6 von der internen Batterie 76 und/oder der externen Leistungsversorgung 73 mit Leistung versorgt.

Eine optionale Beleuchtung 9 ist an oder in dem Gehäuse 8 vorgesehen. Dabei dient die Beleuchtung 9 vorzugsweise der Beleuchtung des Inneren der zweiten Kammer 4. Die Beleuchtung 9 kann entweder durch den Benutzer zuschaltbar sein oder bei Aktivierung der Stimulationsvorrichtung 1 automatisch aktiviert sein. Weiter kann die Beleuchtung 9 aus energiesparenden Leuchtdioden ausgebildet sein. Die Beleuchtung kann beispielsweise als Orientierungshilfe für den Benutzer der Stimulationsvorrichtung 1 im Dunkeln oder als zusätzliche optische Stimulation dienen.

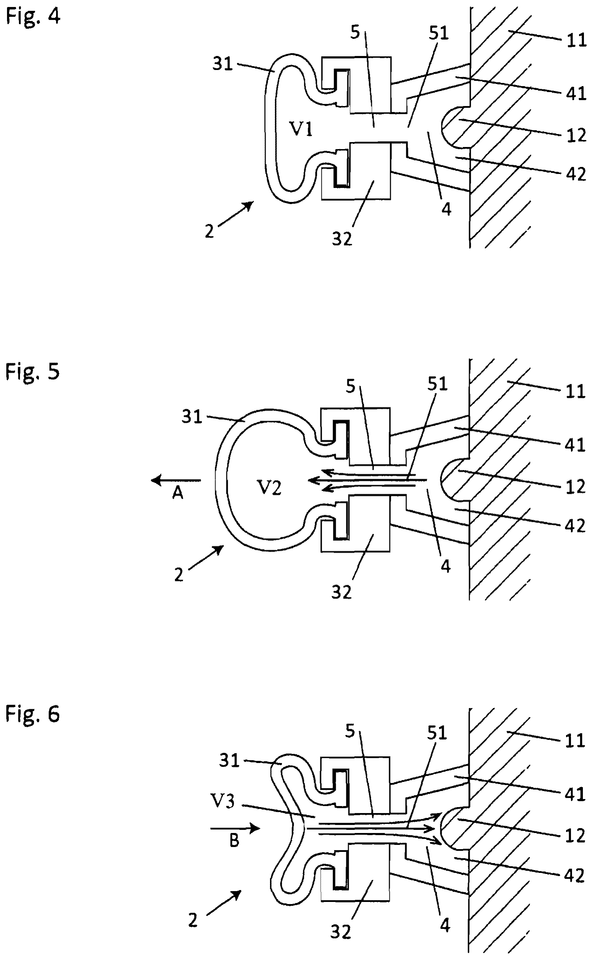

Bezugnehmend auf die Figuren 4, 5 und 6 wird nachstehend der Aufbau und die Funktion eines ersten Aspekts der Druckfelderzeugungseinrichtung 2 der Stimulationsvorrichtung 1 näher erläutert.

Fig. 4 zeigt die Druckfelderzeugungseinrichtung 2 in einem ersten Zustand, wobei die zweite Kammer 4 auf den zu stimulierenden Hautbereich bzw. das Körperteil 11 aufgesetzt ist. Der erste Zustand der Druckfelderzeugungseinrichtung 2 ist durch eine neutrale Auslenkung der ersten Kammer 3 gekennzeichnet, d.h., es wirkt keine externe Kraft, beispielsweise von der Antriebseinheit, auf die erste Kammer 3. Hierbei ist das Volumen V1 der ersten Kammer das Standardvolumen dieser Kammer 3.

Das zu stimulierende Körperteil 11 ist ein Hautbereich des Körpers, wobei hier beispielhaft eine besonders empfindliche erogene Zone, die Klitoris 12, dargestellt ist. Somit ist die Anwendung der vorliegenden Erfindung ist jedoch nicht auf die weibliche Klitoris 11 beschränkt, sondern die Stimulationsvorrichtung 1 kann auf alle Körperteile bzw. erogenen Zonen (beispielsweise die Innenseite der Oberschenkel, die Lenden, Nacken, Brustwarzen, etc.) angewandt werden, welche mittels Medien- bzw. Luftdruckmassage und/oder Unterdruck stimuliert werden können.

Die zweite Kammer 4 bildet durch das Aufsetzen auf das zu stimulierende Körperteil 11 eine zum Äußeren der Druckfelderzeugungseinrichtung2 weitgehend oder vollständig abgeschlossene Kammer, welche nur noch über das Verbindungselement 5 mit der zweiten Kammer in Verbindung steht, wobei die Ränder der Kammer 4 im Idealfall dicht mit der Oberfläche des Körperteils 11 abschließen. Auf diese Weise entstehen zwei kommunizierende Kammern 3 und 4, wobei bei Volumenänderung einer der Kammern 3 oder 4 ein entsprechender Druckausgleich zwischen den Kammern 3 und 4 über das Verbindungselement 5 erfolgt.

Eine Wand 31 der ersten Kammer 3 ist mittels einer Halterung 32 fixiert. Die Halterung 32 ist wiederum an dem Gehäuse 8 befestigt. An der Halterung 32 ist weiter die Wand 41 der zweiten Kammer angebracht. Zwei zueinander ausgerichtete Öffnungen in der Wand 41 der zweiten Kammer und der Halterung 32 bilden gemeinsam das Verbindungselement 5, welches die erste Kammer 3 und die zweite Kammer 5 verbindet. Dabei sind die Wand 31, die Halterung 32 und die Wand 41 vorzugsweise miteinander medien- bzw. luftdicht verklebt. Alternativ können diese auch miteinander (beispielweise mit Hilfe von dichtenden Bereichen zwischen dem Gehäuse 8 und dem jeweiligen Teil) press-gepasst oder verschraubt sein. Auch die Halterung 32 kann mit dem Gehäuse 8 beispielsweise verklebt oder verschraubt sein.

Die Wand 31 der ersten Kammer 3 besteht vorzugsweise aus einem flexiblen, medien- bzw. luftundurchlässigen Material, beispielsweise Gummi. Die Halterung 32 besteht vorzugsweise aus einem starren Kunststoff, welcher ebenso medien- bzw. luftundurchlässig ist. Die Wand 41 der zweiten Kammer ist vorzugsweise aus einem flexiblen, hautfreundlichen Material hergestellt, beispielsweise Silikon oder Gummi.

Fig. 5 zeigt die Druckfelderzeugungseinrichtung 2 von Fig. 4 in einem zweiten Zustand, wobei wiederum die zweite Kammer 4 auf das zu stimulierende Körperteil 11 aufgesetzt ist. Der zweite Zustand ist dadurch gekennzeichnet, dass eine auf die erste Kammer 3 wirkende Kraft A eine Expansion der Kammer 3 bewirkt. Im Detail zieht bei diesem Ausführungsbeispiel die Kraft A die Wand 31 der ersten Kammer 3 in eine Richtung, die von der zweiten Kammer 4 weggerichtet ist.

Dadurch vergrößert sich das Volumen V2 der Kammer 3, d.h., V2 > V1. Um den entstandenen Druckunterschied zwischen den Kammern 3 und 4 auszugleichen, strömt nunmehr das Medium bzw. die Luft von der zweiten Kammer 4 in die erste Kammer 3.

Unter der Annahme, dass in dem ersten Zustand der in den Kammern 3 und 4 vorliegende Druck dem aktuell herrschendem, äußerem Referenzdruck (beispielsweise dem Luftdruck) entspricht, wird nun der vorliegende Gesamtdruck in dem zweiten Zustand geringer sein, als der äußere Referenzdruck. Dieser Unterdruck ist derart ausgelegt, dass dieser vorzugsweise geringer ist, als der übliche systolische Blutdruck in den Blutgefäßen des Körperteils 11. Damit erhöht sich die Durchblutung in diesem Bereich und die Klitoris 12 wird in dem zweiten Zustand besser durchblutet.

Fig. 6 zeigt die Druckfelderzeugungseinrichtung 2 in einem dritten Zustand, wobei wiederum die zweite Kammer 4 auf das zu stimulierende Körperteil 11 aufgesetzt ist. Der dritte Zustand ist dadurch gekennzeichnet, dass eine auf die erste Kammer 3 wirkende Kraft B eine Volumenverkleinerung bzw. Kompression der Kammer 3 bewirkt. Im Detail ist die Kraft B in seiner Richtung der Richtung der Kraft A entgegengesetzt und verformt die Wand 31 der ersten Kammer derart, dass das resultierende Volumen V3 der Kammer kleiner ist, als das Volumen V1. Die Kompression der Kammer 3 bewirkt einen Überdruck in der Kammer 3, welcher durch eine Medien- bzw. Luftströmung durch das Verbindungselement 5 in Richtung der zweiten Kammer 4 ausgeglichen wird.

Diese Medienströmung ist nun durch die Ausrichtung der Öffnung 51 und/oder des Verbindungselements 5 vorzugsweise auf das zu stimulierende Körperteil 11, insbesondere auf die Eichel der Klitoris 12, gerichtet. Die erfindungsgemäße indirekte (Druck-)Massage erfolgt durch das auf das Körperteil 11 strömende Medium. Dabei ist die Größe der Öffnung 51 derart dimensioniert, dass diese im Verhältnis zu dem in der ersten Kammer 3 verdrängten Volumen klein genug ist, um das Medium für eine spürbare Massagewirkung ausreichend zu beschleunigen.

Weiter kann die Art der Strömung nicht nur durch die Größe und die Ausrichtung der Öffnung 51 vorteilhaft beeinflusst werden, sondern auch durch die innere Konfiguration des Verbindungselements. Beispielsweise können helixförmige Rillen in dem Verbindungselement 5 einen Drall der erfindungsgemäßen Strömung verursachen, wobei das Strömungsprofil der Strömung eine "weichere" bzw. turbulentere Wirkung auf das zu stimulierende Körperteil entfaltet. Alternativ kann das sich in der zweiten Kammer 4 ergebende Druckfeld mit Hilfe mehrerer Öffnungen 51 entsprechend der Anwendung angepasst werden.

Bei der in den Figuren 4 bis 6 gezeigten Anordnung ist vorteilhaft, dass diese hygienisch unproblematisch (beispielsweise aufgrund der Vermeidung von Toträumen) und in der Herstellung einfach ist. Beispielsweise sind keine Ventile oder weitere Öffnungen in oder an der ersten Kammer 3 erforderlich.

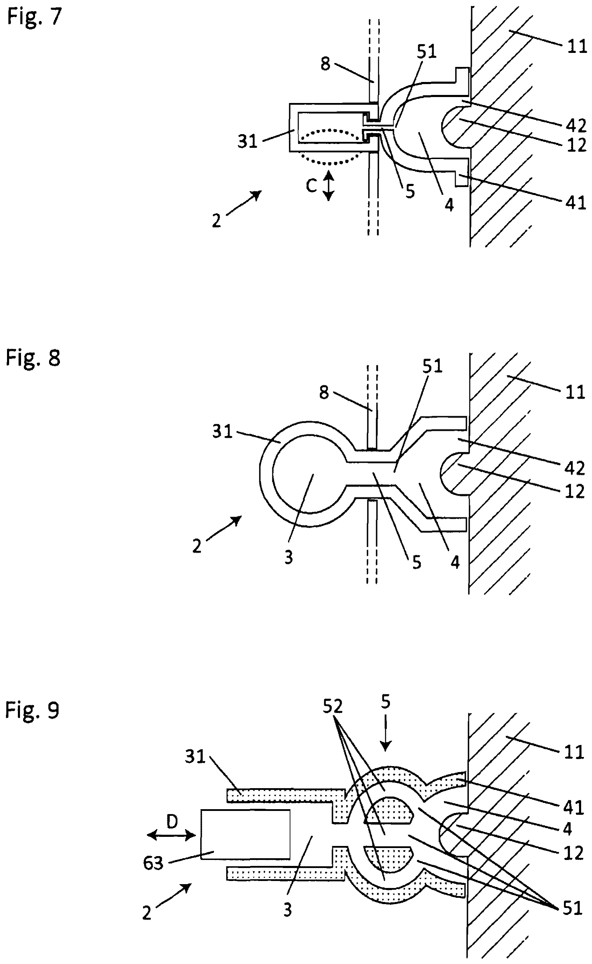

Fig. 7 zeigt einen zweiten Aspekt der vorliegenden Erfindung mit einem alternativen Aufbau der Druckerzeugungseinrichtung 2. So können die Wände 31 und 41 der ersten und zweiten Kammer 3 und 4 derart ineinander eingreifen, dass diese ebenso wie bei dem ersten Aspekt des Aufbaus der Druckerzeugungseinrichtung 2 zwei kommunizierende Kammern mit einem Verbindungselement 5 ausbilden. So entfällt eine gesonderte Halterung, während die zweite Kammer 4 austauschbar ist. Zudem kann das Verbindungselement 5 integral oder einstückig mit der Wand 41 der zweiten Kammer 4 ausgestaltet sein. Eine austauschbare Kammer 4 hat den Vorteil, dass auf diese Weise verschiedene, auf das jeweilige Körperteil angepasste Formgebungen der Kammer 4 zum Einsatz kommen können (eine nähere Erläuterung hierzu findet sich später), ohne dazu die gesamte Stimulationsvorrichtung 1 auszutauschen zu müssen. Alternativ kann die zweite Kammer 4 auch an dem Gehäuse 8 steckbar befestigt werden (nicht näher dargestellt). Die Wand 31 der ersten Kammer 3 kann beispielsweise mit dem Gehäuse 8 verklebt oder verschraubt sein.

Auch kann, wie in Fig. 7 durch die gestrichelte Linie und den Doppelpfeil C näher dargestellt, die Expansion und die Kompression der ersten Kammer 3 durch eine Kraftwirkung erfolgen, die senkrecht zur der Achsrichtung des Verbindungselements 5 liegt. Grundsätzlich kann die durch die Antriebseinheit 5 mittelbar oder unmittelbar auf die erste Kammer 3 ausgeübte Kraft aus einer beliebigen Richtung erfolgen. Entscheidend ist hier bei nur, dass das Volumen ersten Kammer 3 durch die Antriebseinheit 6 vergrößert und verkleinert werden kann.

Fig. 8 zeigt einen dritten Aspekt der Erfindung mit einem einstückigen bzw. einteiligen Aufbau der Druckfelderzeugungseinrichtung 2. Dabei kann als Material der Kammern 3 und 4 ein elastisches Material, beispielsweise Silikon oder Gummi, zum Einsatz kommen. Vorteilhaft ist hierbei, dass evtl. hygienisch bedenkliche Spalte vermieden werden und der Herstellungsaufwand niedriger ist. Auch in diesem Falle kann die Druckfelderzeugungseinrichtung 2 mit dem Gehäuse 8 verklebt oder verschraubt sein. Eine Änderung des Volumens der ersten Kammer 3 erfolgt hier in analoger Weise, wie in Zusammenhang mit Fig. 7 beschrieben.

Fig. 9 zeigt einen vierten Aspekt der Erfindung mit einem alternativen Aufbau der Druckfelderzeugungseinrichtung 2. Dabei sind die zweite Kammer 4, mehrere Verbindungselemente 5, sowie Teilabschnitte der Wand 31 der ersten Kammer 3 einstückig ausgebildet. Alternativ kann die Druckfelderzeugungseinrichtung 2 unter Wahrung des geometrischen Vorbilds der Fig. 9 in ähnlicher Weise wie in Fig. 4 oder 7 dargestellt auch zwei- oder mehrstückig aus Einzelteilen aufgebaut sein.

Die Volumenänderung der ersten Kammer 3 erfolgt hier in einer zur Kolbenpumpe ähnlichen Weise, jedoch fehlen hier etwaig vorhandene Ventile. So wird ein Kolben 63 durch die Antriebseinheit, beispielsweise ein Elektromotor oder ein Elektromagnet, in den Richtungen des Doppelpfeils D hin- und herbewegt. Diese Art des Antriebs hat den Vorteil, dass das Volumen der ersten Kammer 3 in einfacher Weise auf Null bzw. auf annähernd Null verringert werden kann, und so die erste Kammer 3 fast vollständig entleert werden kann.

Die Ausgestaltung des Verbindungselements 5 mit mehreren Kanälen 52 und Öffnungen 51 führt zu einer Verteilung des Druckfeldes auf mehrere Konzentrationspunkte. Während die Ausgestaltung des Verbindungselements 5 mit nur einem Kanal, wie in Zusammenhang mit Fig. 6 beschrieben, zur Ausbildung eines stark konzentrierten Medien- bzw. Luftstroms auf einen Zielbereich hin führt, kann bei der in Fig. 9 gezeigten Ausgestaltung des Verbindungselements 5 der Medien- bzw. Luftstrom auf mehrere Zielbereiche verteilt werden. So kann beispielweise die Klitoris 11 nicht nur an seiner Eichel angeblasen werden, sondern gleichmäßig von mehreren Seiten. Diese Verteilung der Konzentration der Luftströmung auf mehrere Bereiche kann je nach Anwendung helfen, eine Überstimulation zu vermeiden, und/oder helfen, den Stimulationsbereich zu vergrößern.

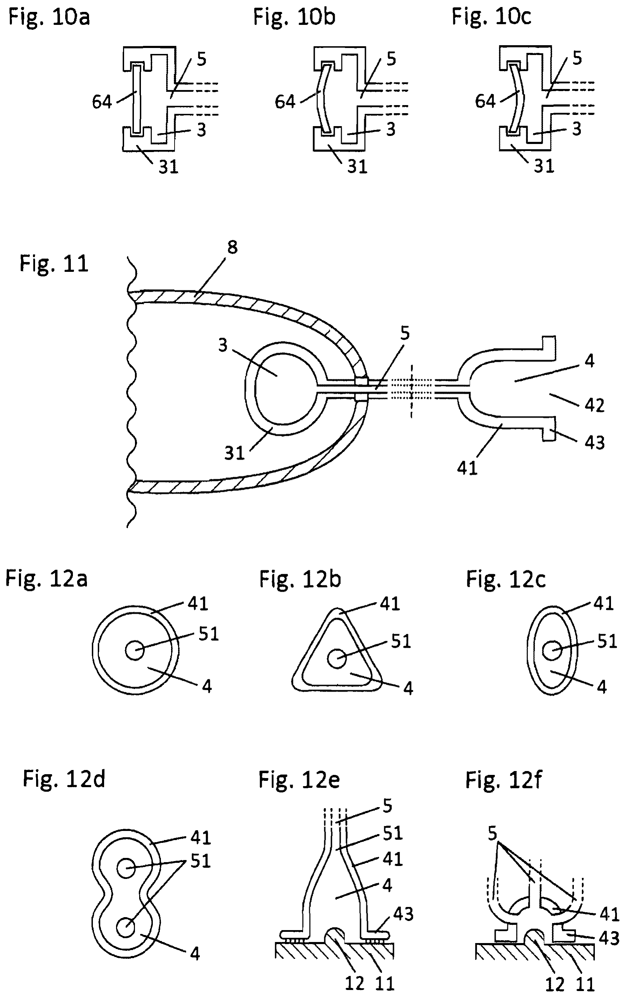

Die Figuren 10a bis 10c zeigen einen fünften Aspekt der Erfindung mit (Teil-) Querschnitten eines Aufbaus der Druckfelderzeugungseinrichtung 2 mit einem Biegeelement 64 als Antrieb zur Volumenänderung der ersten Kammer 3. Das Biegelement 64 kann beispielsweise ein herkömmliches piezoelektrisches Biegelement sein, welches sich nach Anlegen einer Spannung verformt bzw. biegt. Bei diesem Aspekt der Erfindung ist die Wand 31 der ersten Kammer 3 starr bzw. steif aufgebaut, während das Biegeelement 64 in geeigneter Weise an den Seiten der ersten Kammer 3 eingepasst ist. Dabei sind die Übergangsstellen zwischen dem Biegeelement 64 und der Wand 31 abgedichtet (beispielsweise elastisch verklebt). Bei diesem Aufbau ist der Antrieb für die Druckfelderzeugungseinrichtung 2 schon in diese integriert und es entfällt ein externer Antrieb. Beispielsweise entfällt ein Elektromotor mit einem Exzenter. Dadurch können u.A. evtl. störende Eigenschwingungen aufgrund der Exzenterbewegung der Stimulationsvorrichtung verringert werden.

Im Detail zeigt Fig. 10a die Druckfelderzeugungseinrichtung 2 mit dem Biegeelement 64 in Neutralstellung. Somit ist das Volumen der ersten Kammer 3 mit dem Biegeelement 64 in Neutralstellung das Standardvolumen. Fig. 10b zeigt weiter die erste Kammer 3 mit einem erregten und in Folge nach Außen gebogenen Biegelement, weshalb das Volumen der ersten Kammer 3 vergrößert ist; und in Folge herrscht in der Druckfelderzeugungseinrichtung 2 ein Unterdruck. Fig. 10c zeigt ein in Vergleich zu Fig. 10b entgegengesetzt erregtes Biegeelement der ersten Kammer 3, weshalb das Volumen der ersten Kammer 3 verkleinert ist; und in Folge herrscht in der Druckfelderzeugungseinrichtung 2 ein Überdruck.

Fig. 11 zeigt eine zweite Ausführungsform der Erfindung mit einer örtlich getrennten Anordnung der Kammern 3 und 4 der Druckfelderzeugungseinrichtung 2. Dabei sind die Kammern 3 und 4 über ein ausgedehntes Verbindungselement 5 verbunden, welches ein längerer flexibler Schlauch oder ein auch starres Rohr sein kann. Beispielsweise kann die Länge des Verbindungselements 5 0,5m betragen. Damit ist es möglich, das Gehäuse 8 in einer Hand zu halten, während die andere Hand die zweite Kammer 4 auf das zu stimulierende Körperteil 11 hält; oder aber kann man das Gehäuse 8 einfach zur Seite legen, während der Benutzer nur die zweite Kammer 4 in Händen hält. Bei dieser Ausführungsform kann die Stimulationsvorrichtung auch als Tischgerät ausgestaltet sein.

Die Figuren 12 a) bis 12 f) zeigen verschiedene Unter- und Seitenansichten weiterer Aspekte der zweiten Kammer 4 der vorliegenden Erfindung. Im Detail zeigt Fig. 12 a) eine Unteransicht einer kreisförmigen zweiten Kammer 4 mit einer mittig angeordneten Öffnung 51; Fig. 12 b) eine Unteransicht einer dreiecksförmigen zweiten Kammer 4 mit einer mittig angeordneten Öffnung 51; Fig. 12 c) eine Unteransicht einer ovalen zweiten Kammer 4 mit einer mittig angeordneten Öffnung 51; und Fig. 12 d) eine Unteransicht einer annähernd acht-förmigen zweiten Kammer 4 mit zwei zur Mitte versetzt angeordneten Öffnungen 51. Fig. 12 e) zeigt weiter einen Seitenquerschnitt einer erfindungsgemäßen zweiten Kammer 4, wobei die zweite Kammer 4 zusätzlich eine erweiterte Kontaktfläche 43 zur Haut bzw. ein Auflageteil 43 aufweist, um die (Ab-) Dichtfunktion der zweiten Kammer 4 an der Haut zu verbessern. Die erweiterte Kontaktfläche 43 kann zudem Rillen oder Vorsprünge aufweisen, die die Dichtfunktion noch weiter verbessern. Fig. 12 f) zeigt einen Seitenquerschnitt einer zweiten Kammer 4 mit mehreren getrennten Verbindungselementen 5 und einer erweiterten Kontaktfläche aufgrund des Auflageteils 43.

So kann die Form der zweiten Kammer 4 grundsätzlich an die Anatomie der zu stimulierenden erogenen Zone angepasst sein. Dabei ist die Form der Kammer 4 von Fig. 12 a) beispielsweise an die runde Form der Brust angepasst, während die Form der Kammer 4 der Fig. 12 c) besser an die Form der weiblichen Vulva angepasst ist. Weiter bestimmt die Form der zweiten Kammer 4 zudem auch die Ausprägung des erfindungsgemäßen Druckfeldes. So bestimmt die Größe der zweiten Kammer 4 im Verhältnis zu dem von der ersten Kammer 3 verdrängten Volumen die Höhe des erreichbaren Unter- bzw. Überdrucks. Weiter kann über die Nähe der Öffnung 51 des Verbindungselements 5 zu dem zu stimulierenden Hautbereich die Intensität der erfindungsgemäßen Massagewirkung auf diese bestimmt werden. Mit mehreren Öffnungen 51, vgl. Fig. 12 d) , kann die Massagewirkung auch auf mehrere Bereiche verteilt werden. So kann beispielsweise die Klitoris weniger direkt an der sehr empfindlichen Klitoriseichel stimuliert werden (vgl. Fig. 12 e) ), sondern verstärkt an den die Klitoriseichel umgebenden Bereichen, um eine Überreizung der Klitoris zu vermeiden.

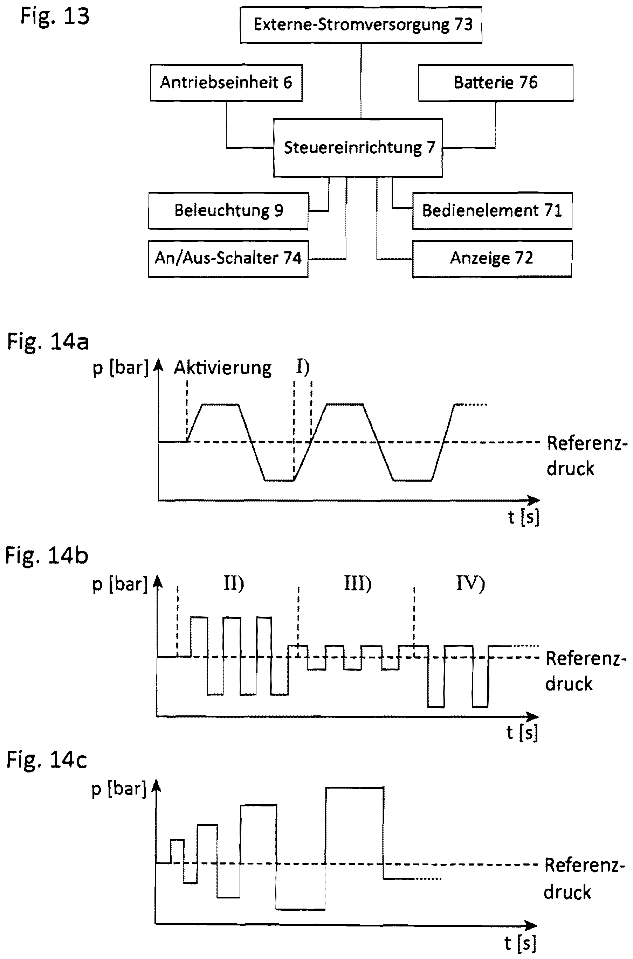

Fig. 13 zeigt ein Blockdiagramm eines Beispiels des funktionellen Aufbaus einer Ausführungsform der vorliegenden Erfindung mit einer Steuereinrichtung 7, einer Antriebseinheit 6, einer Beleuchtung 9, einem An-/Aus- Schalter 74, Bedienelementen 71, einer Batterie 76 und einer externen Stromversorgung 73.

Die Steuereinrichtung 7, welche beispielsweise einen Mikrocontroller aufweist oder festverdrahtet ist, steuert zunächst die Stromversorgung aller Verbraucher der Stimulationsvorrichtung 1, sowie optional einen Lade- und Entladevorgang der Batterie 76 und/oder ein Batteriemanagement. Insbesondere steuert die Steuereinrichtung 7 die Erregung der Antriebseinheit 6, beispielsweise die Größe der Auslenkung, die Frequenz, die Modulation, etc.

Weiter kann die Steuereinrichtung 7 einen Speicher aufweisen, in dem zumindest ein Modulations- bzw. Stimulationsmuster (diese werden in Zusammenhang mit Fig. 14 a) bis c) näher erläutert) abgespeichert ist. Die Antriebseinheit 6 kann nun nach Wahl des Benutzers der Stimulationsvorrichtung 1 über die Bedienelemente 71 entsprechend dieser vorgespeicherten Stimulationsmuster in seiner Erregung angesteuert werden. Die Stimulationsmuster des Druckfeldes können optional auch durch den Benutzer über die Bedienelemente individuell erstellt und abgespeichert werden.

Fig. 14 a) zeigt den zeitlichen Verlauf eines Gesamtdrucks p in der Druckfelderzeugungseinrichtung (2) bei Anwendung dieser zur Stimulation. Die gestrichelte Linie gibt den Referenzdruck, beispielsweise den aktuell herrschende atmosphärischen Druck, an, welcher außerhalb der Druckfelderzeugungseinrichtung (2) vorhanden ist. Wird die zweite Kammer 4 nun auf das zu stimulierende Körperteil 11 aufgesetzt, wird der anfangs herrschende Umgebungsdruck der in Druckfelderzeugungseinrichtung (2) etwa beibehalten. Nunmehr wird angenommen, dass die zweite Kammer 4 auf das zu stimulierende Körperteil weitgehend dicht aufgesetzt ist. Nach Aktivierung der Stimulationsvorrichtung wird die Antriebseinheit 6 von der Steuereinrichtung 7 gemäß einem vorgespeicherten Stimulationsmusters angesteuert bzw. erregt. Entsprechend werden sich das Volumen der ersten Kammer 3 und damit der Gesamtdruck in der Druckfelderzeugungseinrichtung 2 ändern, wobei die Druckänderungen auf den Referenzdruck aufmoduliert werden. Das in Fig. 14 a) beispielhaft gezeigte Druck- bzw. Stimulationsmuster entwickelt ein gepulstes, regelmäßiges Druckfeld. In Phasen der Erhöhung des Drucks wird die zu stimulierende erogene Zone angeblasen bzw. massiert, während in den Zeiten, in denen ein Unterdruck herrscht, die Durchblutung des Körperteils 11, beispielsweise der Klitoris, gefördert wird. So existieren erfindungsgemäß Zeiträume (In Fig. 14 a) mit I) gekennzeichnet), in denen ein Unterdruck herrscht, während die Klitoris gleichzeitig indirekt massiert wird.

Fig. 14 b) zeigt drei Beispiele von alternativen Stimulationsmustern. So ist in dem mit II) gekennzeichneten Bereich ein gepulstes Stimulationsmuster mit hoher Amplitude dargestellt. In dem mit III) gekennzeichneten Bereich ist ein gepulstes Stimulationsmuster mit niedriger Amplitude dargestellt. Weiter ist in dem mit IV) gekennzeichneten Bereich ein in der zeitlichen Abfolge und in der Amplitude unregelmäßiges bzw. asymmetrisches Stimulationsmuster abgebildet. Die Muster können je nach körperlicher Wirkung / Anwendung und nach individuellen Wünschen variiert werden.

Fig. 14 c) zeigt ein weiteres Beispiel eines alternativen Stimulationsmusters. So kann die Stärke des Drucks mit der Zeit zunehmen, um sich an den Erregungszustand des Benutzers anzupassen.

Die Erfindung lässt neben den erläuterten Ausführungsformen weitere Gestaltungsgrundsätze zu. So können verschiedene Anordnungen bzw. Aufbauten der ersten Kammer 3 beliebig mit verschiedenen Ausführungen der zweiten Kammer 5 oder dem Verbindungselement 5 kombiniert werden. Beispielsweise kann die erste Kammer 3 mit dem Antrieb der Figuren 10 mit der zweiten Kammer der Fig. 12 f) kombiniert werden.

Obschon bei allen Ausführungsformen nur eine erste Kammer 3 dargestellt ist, können auch zwei oder mehr erste Kammern 3 vorhanden sein, welche dann entsprechend simultan oder zeitversetzt derart angetrieben werden, dass diese Ihr Volumen ändern, um ein erfindungsgemäßes Druckfeld aufzubauen.

Obschon bei allen Ausführungsformen nur eine Öffnung aus der ersten Kammer 3 zu dem Verbindungselement 5 dargestellt ist, so können auch mehrere Öffnungen für ein Verbindungselement 5 oder auch mehrere Öffnungen für mehrere Verbindungselemente 5 in der ersten Kammer 3 vorhanden sein.

Eine Stimulationsvorrichtung 1 kann mehrere Druckfelderzeugungseinrichtung 2 aufweisen. So können beispielsweise zwei Druckfelderzeugungseinrichtungen vorhanden sein, um zwei erogene Zonen gleichzeitig zu stimulieren.

Die erfindungsgemäßen Stimulationsmuster können von dem in den Figuren 14 a), b) und c) gezeigten Mustern abweichen, solange diese eine zeitliche Abfolge von Unter- und Überdrücken aufweisen. Beispielsweise kann zu Beginn bzw. nach Aktivierung der Vorrichtung zunächst ein relativ lang anhaltender Unterdruck aufgebaut sein (beispielsweise 3 Minuten), um die Durchblutung der zu stimulierenden Zone effektiv zu erhöhen, worauf dann langsam in der Amplitude größer werdende Pulse von Unter- und Überdrücken folgen.

### Bezugszeichenliste:

1 : Stimulationsvorrichtung
2 : Druckfelderzeugungseinrichtung
3 : erste Kammer
4 : zweite Kammer
5 : Verbindungselement
6 : Antriebseinheit
7 : Steuereinrichtung
8 : Gehäuse
9 : Beleuchtung
11 : Körperteil
12 : Klitoris
31 : Wand der ersten Kammer
32 : Halterung
41 : Wand der zweiten Kammer
42 : Öffnung der ersten Kammer
43 : Kontaktfläche
51 : Öffnung des Verbindungselements zur zweiten Kammer 61 : Antriebswelle
62 : Exzenter
63 : Kolben
64 : Biegeelement
71 : Bedienelement
72 : Anzeige
73 : Stromversorgung
74 : An- /Aus- Schalter
75 : Buchse
76 : Batterie
77 : Steuerplatine

### BEISPIELE

Die vorliegende Offenbarung betrifft ferner folgende Beispiele:
1. Stimulationsvorrichtung (1) für erogene Zonen, insbesondere für die Klitoris (12), aufweisend:
   zumindest eine Druckfelderzeugungseinrichtung (2) mit:
   zumindest einer ersten Kammer (3); und
   zumindest einer zweiten Kammer (4) mit zumindest einer Öffnung (42) zum Aufsetzen auf ein Körperteil (11); und
   zumindest einem Verbindungselement (5), welches die erste Kammer (3) mit der zweiten Kammer (4) verbindet; und
   einer Antriebseinheit (6), welche das Volumen der ersten Kammer (3) derart verändert, dass über das Verbindungselement (5) in der zweiten Kammer (4) ein stimulierendes Druckfeld erzeugt wird; und
   eine Steuereinrichtung (7), welche die Antriebseinheit (6) ansteuert.
2. Stimulationsvorrichtung (1) gemäß Beispiel 1, wobei das in der zweiten Kammer (4) erzeugte Druckfeld aus einem Muster von Unter- und Überdrücken besteht, welche auf einen Referenzdruck, vorzugsweise auf den Normaldruck, aufmoduliert sind.
3. Stimulationsvorrichtung (1) gemäß Beispiel 1 oder 2, wobe die erste Kammer (3) über das Verbindungselement (5) ausschließlich mit der zweiten Kammer (4) verbunden ist.
4. Stimulationsvorrichtung (1) gemäß einem der Beispiele 1 bis 3, wobei die zumindest eine Öffnung (51) des zumindest einen Verbindungselements (5) dem zu stimulierenden Körperteil (11) gegenüberliegt, und auf das zu stimulierende Körperteil (11) gerichtet ist.
5. Stimulationsvorrichtung (1) gemäß einem der Beispiele 1 bis 4, wobei die zweite Kammer (4) aus einem flexiblen Material, vorzugsweise aus Silikon oder Gummi, hergestellt ist und/oder aus einem zumindest teilweise durchsichtigen Material hergestellt ist und/oder an die Form der vaginalen labia minora derart angepasst ist, dass diese von der Öffnung der zweiten Kammer (4) vollständig übergedeckt wird.
6. Stimulationsvorrichtung (1) gemäß einem der Beispiele 1 bis 5, wobei die zweite Kammer (4) mit dem Verbindungselement (5) und der ersten Kammer (3) einstückig ausgebildet ist.
7. Stimulationsvorrichtung (1) gemäß einem der Beispiele 1 bis 5, wobei die zweite Kammer (4) von der Stimulationsvorrichtung (1) auswechselbar angeordnet ist.
8. Stimulationsvorrichtung (1) gemäß einem der Beispiele 1 bis 5, wobei die zweite Kammer (4) von der Stimulationsvorrichtung (1) getrennt angeordnet ist, und das Verbindungselement (5) ein Schlauch oder ein Rohr ist.
9. Stimulationsvorrichtung (1) gemäß einem der Beispiele 1 bis 8, wobei die zweite Kammer (4) ein abdichtendes Auflageteil (43) zur Vergrößerung der Kontaktfläche der zweiten Kammer (4) auf der Haut aufweist.
10. Stimulationsvorrichtung (1) gemäß einem der Beispiele 1 bis 9, wobei die jeweilige Modulation des Druckfeldes mittels eines Bedienelements 71 veränderbar ist.
11. Stimulationsvorrichtung (1) gemäß einem der Beispiele 1 bis 10, wobei die Stimulationsvorrichtung (1) eine Beleuchtung (9), vorzugsweise eine LED-Beleuchtung, zur Beleuchtung der zweiten Kammer (4) aufweist.
12. Stimulationsvorrichtung (1) gemäß einem der Beispiele 1 bis 11, wobei das Verbindungselement (5) eine innere Formgebung und eine Öffnung zur zweiten Kammer (4) aufweist, welche derart ausgestaltet sind, dass das Druckfeld in Richtung und Ausprägung moduliert wird.
13. Stimulationsvorrichtung (1) gemäß einem der Beispiele 1 bis 12, wobei die Stimulationsvorrichtung (1) ein, vorzugsweise batteriebetriebenes, Handgerät ist.
14. System mit einer Stimulationsvorrichtung (1) gemäß einem der Beispiele 1 bis 13, aufweisend:
   eine zu der Stimulationsvorrichtung (1) getrennt angeordnete Fernsteuervorrichtung,
   wobei die Steuereinrichtung (7) der Stimulationsvorrichtung (1) von der Fernsteuereinrichtung fernsteuerbar ist.
15. Verfahren zur Stimulation von erogonen Zonen, insbesondere der Klitoris (12), aufweisend folgende Schritte:
   Ausbilden eines auf ein Körperteil (11) gerichteten Druckfeldes; und
   Modulieren des Druckfeldes mit einem Muster von Unter- und Überdrücken, bezüglich eines Referenzdrucks, vorzugsweise dem Normaldruck.
16. Verfahren zur Stimulation von erogonen Zonen gemäß Beispiel 15, wobei
   die Stimulationswirkung durch die Modulation des Druckfeldes mittels eines Bedienelements (71) individuell beeinflusst wird.
17. Verfahren zur Stimulation von erogonen Zonen gemäß Beispiel 15 oder 16, wobei
   die Modulation pulsförmig ist.
18. Verfahren zur Stimulation von erogonen Zonen, vorzugsweise der Klitoris (12), mit der Stimulationsvorrichtung (1) gemäß einem der Beispiele 1 bis 13, aufweisend folgende Schritte:
   Aufsetzen der zweiten Kammer (4) über das Körperteil (11), vorzugsweise über der Klitoris (12);
   Ausbilden eines auf das Körperteil (11) gerichteten Druckfeldes;
   Modulieren des Druckfeldes mit einem Muster von Unter- und Überdrücken, bezüglich eines Referenzdrucks, vorzugsweise dem Normaldruck;
   Absetzen der zweiten Kammer (4) von dem Körperteil (11).
19. Verwendung der Stimulationsvorrichtung (1) gemäß einem der Beispiele 1 bis 13 als Sexspielzeug zur Stimulation der weiblichen Klitoris.

## Patentansprüche

1. Stimulationsvorrichtung (1) für die Klitoris (12); aufweisend:
eine Druckfelderzeugungseinrichtung (2) mit:
einer ersten Kammer (3); und
einer zweiten Kammer (4) mit zumindest einer Öffnung (42) zum Aufsetzen über die Klitoris (12); und
einem Verbindungselement (5), das die erste Kammer (3) mit der zweiten Kammer (4) verbindet; und
einer Antriebseinheit (6), die das Volumen der ersten Kammer (3) durch Auslenkung einer flexiblen Wand (31) der ersten Kammer (3) derart verändert, dass über das Verbindungselement (5) in der zweiten Kammer (4) ein stimulierendes Druckfeld erzeugt wird; und
eine Steuereinrichtung (7), welche die Antriebseinheit (6) ansteuert;
wobei das in der zweiten Kammer (4) erzeugte Druckfeld aus einem Muster von Unter- und Überdrücken besteht, die auf den Normaldruck aufmoduliert sind.

2. Stimulationsvorrichtung (1) gemäß Anspruch 1, wobei das Verbindungselement (5) eine Öffnung (51) aufweist; die der Klitoris (12) gegenüberliegt; und auf die Klitoris (12) gerichtet ist.

3. Stimulationsvorrichtung (1) gemäß Anspruch 1 oder 2; wobei die zweite Kammer (4) aus einem flexiblen Material; vorzugsweise aus Silikon oder Gummi hergestellt ist und/oder aus einem zumindest teilweise durchsichtigen Material hergestellt ist und/oder an die Form der vaginalen labia minora derart angepasst ist; dass diese von der Öffnung der zweiten Kammer (4) vollständig übergedeckt wird.

4. Stimulationsvorrichtung (1) gemäß einem der Ansprüche 1 bis 3, wobei die zweite Kammer (4) mit dem Verbindungselement (5) und der ersten Kammer (3) einstückig ausgebildet ist.

5. Stimulationsvorrichtung (1) gemäß einem der Ansprüche 1 bis 3, wobei die zweite Kammer (4) steckbar an einem Gehäuse der Stimulationsvorrichtung befestigt ist.

6. Stimulationsvorrichtung (1) gemäß einem der Ansprüche 1 bis 3, wobei die zweite Kammer (4) von der Stimulationsvorrichtung (1) getrennt angeordnet ist,
und das Verbindungselement (5) ein Schlauch oder ein Rohr ist.

7. Stimulationsvorrichtung (1) gemäß einem der Ansprüche 1 bis 6, wobei die zweite Kammer (4) ein abdichtendes Auflageteil (43) zur Vergrößerung der Kontaktfläche der zweiten Kammer (4) auf der Haut aufweist.

8. Stimulationsvorrichtung (1) gemäß einem der Ansprüche 1 bis 7, wobei die jeweilige Modulation des Druckfeldes mittels eines Bedienelements 71 veränderbar ist.

9. Stimulationsvorrichtung (1) gemäß einem der Ansprüche 1 bis 8, wobei die Stimulationsvorrichtung (1) eine Beleuchtung (9), vorzugsweise eine LED-Beleuchtung, zur Beleuchtung der zweiten Kammer (4) aufweist.

10. Stimulationsvorrichtung (1) gemäß einem der Ansprüche 1 bis 9, wobei das Verbindungselement (5) eine innere Formgebung und eine Öffnung zur zweiten Kammer (4) aufweist, welche derart ausgestaltet sind, dass das Druckfeld in Richtung und Ausprägung moduliert wird.

11. Stimulationsvorrichtung (1) gemäß einem der Ansprüche 1 bis 10, wobei die Stimulationsvorrichtung (1) ein batteriebetriebenes Handgerät ist.

12. Stimulationsvorrichtung (1) gemäß Anspruch 1, wobei in einem ersten Zustand, wenn keine externe Kraft auf die Kammer (3) wirkt, das Volumen der ersten Kammer (3) ein Standardvolumen (VI) einnimmt,
wobei in einem zweiten Zustand, wenn eine auf die erste Kammer (3) wirkende Kraft (A) eine Expansion der Kammer (3) bewirkt, das Volumen (V2) der ersten Kammer (3) gegenüber dem Standardvolumen (VI) vergrößert ist,
wobei in einem dritten Zustand, wenn eine auf die erste Kammer (3) wirkende Kraft (B) eine Kompression der Kammer (3) bewirkt, das Volumen der ersten Kammer (3) gegenüber dem Standardvolumen (VI) verkleinert ist,
wobei die Antriebseinheit (6) eingerichtet ist, durch Auslenkung der flexiblen Wand (31) im Wechsel das Volumen der ersten Kammer (3) gegenüber dem Standardvolumen zu vergrößern und zu verkleinern, sodass, wenn die Stimulationsvorrichtung über der Klitoris aufgesetzt ist, das in der zweiten Kammer (4) erzeugte Druckfeld aus einem Muster von Unter- und Überdrücken besteht, welche auf den Normaldruck aufmoduliert sind.

13. Verwendung der Stimulationsvorrichtung (1) gemäß einem der Ansprüche 1 bis 12 als Sexspielzeug zur nicht-therapeutischen Stimulation der weiblichen Klitoris.

14. Verwendung einer Stimulationsvorrichtung (1) als Stimulationsvorrichtung für die Klitoris (12) zur nicht-therapeutischen sexuellen Erregung bis zum Klimax, wobei wenn die Stimulationsvorrichtung über die Klitoriseichel aufgesetzt ist, sich ein auf die Klitoris gerichtetes, stimulierendes Druckfeld bestehend aus einem Muster von Unter- und Überdrücken, welche auf den Normaldruck aufmoduliert sind, ausbildet, wobei die Stimulationsvorrichtung gemäß einem der Ansprüche 1 bis 12 ausgebildet ist.

15. System mit einer Stimulationsvorrichtung (1) gemäß einem der Ansprüche 1 bis 12, aufweisend:
eine zu der Stimulationsvorrichtung (1) getrennt angeordnete Fernsteuervorrichtung,
wobei die Steuereinrichtung (7) der Stimulationsvorrichtung (1) von der Fernsteuereinrichtung fernsteuerbar ist.
